Europäisches Patentamt

European Patent Office

Office européen des brevets

(11) Publication number: **0 464 532 B1**

# EUROPEAN PATENT SPECIFICATION

(45) Date of publication of patent specification: **27.12.95**

(51) Int. Cl.6: **C01B 17/05**, C01B 17/02

(21) Application number: **91110303.4**

(22) Date of filing: **22.06.91**

The file contains technical information submitted after the application was filed and not included in this specification

(54) **Process for recovering sulfur**

(30) Priority: **29.06.90 JP 169709/90**

(43) Date of publication of application:
**08.01.92 Bulletin 92/02**

(45) Publication of the grant of the patent:
**27.12.95 Bulletin 95/52**

(84) Designated Contracting States:
**BE DE FR GB IT NL SE**

(56) References cited:
EP-A- 0 002 524    EP-A- 0 348 875
GB-A- 2 018 611    US-A- 4 039 441
US-A- 4 631 068    US-A- 4 717 481

(73) Proprietor: **IDEMITSU KOSAN COMPANY LIMITED**
**1-1, Marunouchi 3-chome**
**Chiyoda-ku**
**Tokyo 100 (JP)**

(72) Inventor: **Kikuchi, Tohru, c/o Idemitsu Kosan Co., Ltd.**
**1280, Kamiizumi Sodegaura-shi**
**Chiba-ken (JP)**
Inventor: **Komori, Norio, c/o Idemitsu Kosan Co., Ltd.**
**1280, Kamiizumi Sodegaura-shi**
**Chiba-ken (JP)**
Inventor: **Iida, Hiroshi, c/o Idemitsu Kosan Co., Ltd.**
**1280, Kamiizumi Sodegaura-shi**
**Chiba-ken (JP)**

(74) Representative: **Türk, Gille, Hrabal, Leifert**
**Brucknerstrasse 20**
**D-40593 Düsseldorf (DE)**

Rank Xerox (UK) Business Services
(3.10/3.09/3.3.3)

**Description**

BACKGROUND OF THE INVENTION

1. Field of the invention

The present invention relates to a process for recovering sulfur from hydrogen sulfide-containing gas with an aqueous iron salt solution containing ferric ions in an absorption vessel, at a temperature higher than the melting point of sulfur resulting in sulfur formation. More particularly, it relates, to a process which comprises providing a molten sulfur drops coalescing step near the outlet of the gas-liquid contacting step in a closed system to improve the reovery of sulfur in the sulfur-separating step, and which permits a stable recovering of sulfur without being affected by the type of gas-liquid contacting step or variation in operating conditions.

2. Description of the Related Arts

Heretofore, hydrogen sulfide by-produced by refining crude petroleums has been industrially treated by Claus method. According to Claus method, the sulfur moiety in hydrogen sulfide is recovered as sulfur, while hydrogen moiety is not recovered as hydrogen gas, but becomes water, and cannot be utilized industrially with a high efficiency.

As a process for recovering sulfur and hydrogen gas from hydrogen sulfide, a process using an aqueous solution of ferric salt is known. Said process is to separate hydrogen sulfide to sulfur and hydrogen ion, taking advantage of the reaction that hydrogen sulfide, upon contact with an aqueous solution containing ferric ions, reduces the ferric ion to ferrous ion, and that sulfur is produced simultaneously. Up to now, however, no process for recovering both sulfur and hydrogen gas efficiently from hydrogen sulfide has ever been developed yet.

Recently, a process in which a temperature higher than the melting point of sulfur is maintained in the gas-liquid contacting step has been proposed (JP-A-2009703 and EP-A-0 348 875). Said process, however, involves a possibility that the concentration of the molten sulfur drops increases depending on the method of gas-liquid contacting step or operating conditions, to lower the efficiency in recovering sulfur in the sulfur separating step. Such a fall in the efficiency in recovering sulfur brings the inflow of sulfur into the electrochemical regenerating step, which causes a fall in the efficiency of the electrochemical treatment. In order to improve the efficiency in recovering sulfur, the treating capacity of the sulfur separating step can be increased, but it requires an extremely large apparatus for sulfur separation step.

Further, from US-A-4 631 068 a process for removing sulfur from an aqueous sulfur-containing suspension is known which uses filters such as those from a randomly oriented material and sintered metal filters. However, the sulfur recovery rate is insufficient even if using such filters.

Therefore, the object of the present invention is to provide an improved process for recovering the sulfur from hydrogen sulfide-containing gas which is free of the above defects and in particular leads to an improved efficiency in recovering sulfur.

Under these circumstances, the present inventors found that the above object can be achieved by a process wherein the recovery of sulfur is raised and a constant recovery of sulfur is maintained without being affected by the method of gas-liquid contacting step or variation in operating conditions if a molten sulfur drop coalesce step is provided at or near the outlet of the gas-liquid contacting step in the sulfur recovering process. The present invention has been accomplished based on such findings.

SUMMARY OF THE INVENTION

The present invention provides a process for recovering the sulfur from hydrogen sulfide-containing gas with an aqueous iron salt solution containing ferric ions in an absorption vessel at a temperature higher than the melting point of sulfur resulting in sulfur formation, which is characterized by coalescing the fine drops of molten sulfur dispersed in the resulting solution containing both ferrous and ferric ions, said solution flowing continously out of an outlet disposed in a lower part of said absorption vessel without being agitated, into larger drops by passing the fine drops through a fiber-containing layer with a linear velocity of 0.013 to 2 m/s, said layer having a void-ratio of 0.05 to 0.995, and said fibers having a diameter of 1.0 to 1000 $\mu$m, preferably of 5 to 30 $\mu$m, and then separating and recovering the sulfur.

According to preferred embodiments of the above process
the concentration of ferric irons in the aqueous iron salt solution is 0.01 to 5 mol/l and

the height of the fiber-containing layer is preferably 22 cm or less.

According to a further preferred embodiment the process of the present invention additionally comprises a step consisting of electrochemically treating the aqueous solution obtained by separating sulfur to recover hydrogen and the regenerated aqueous iron salt solution containing ferric ions.

In the claimed process the recovery of sulfur is substantially raised and a constant recovery of sulfur is maintained without being affected by the method of gas-liquid contacting step of variation in operating conditions.

## BRIEF DESCRIPTION OF THE DRAWING

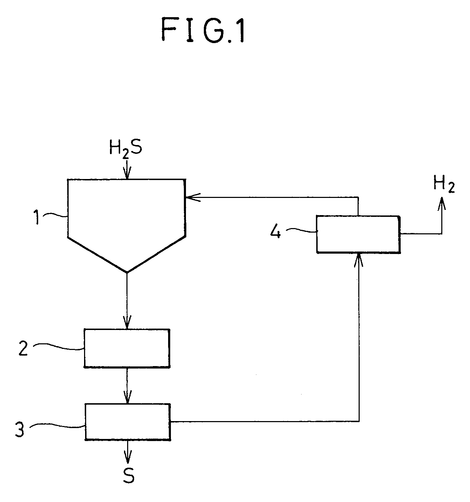

Fig. 1 shows an outline of an example of apparatus to be used for the process of the present invention.
1: Gas-liquid Contacting Step
2: Molten Sulfur Coalescing Step
3: Sulfur Separating Step and optionally
4: Electrochemical Regeneration Step

## DESCRIPTION OF THE PREFERRED EMBODIMENTS

The outline of the recovering process of the present invention is as shown in Fig. 1. Said process comprises three or four steps and each step now will be explained in order.

### Gas-Liquid Contacting Step

In the process of the present invention, the hydrogen sulfidecontaining gas and iron salt aqueous solution containing ferric ions are contacted and reacted at first. Gases to be treated in the gas-liquid contacting step are hydrogen sulfide-containing gases, but may also be other gases than a pure hydrogen sulfide gas provided it contains hydrogen sulfide. The hydrogen sulfide-containing gases may be contaminated with other gases if they are inert against ferric ions. For example, mixed gases of hydrogen sulfide with hydrogen, carbon monoxide, carbon dioxide, hydrocarbon (methane, ethane, etc.), ammonia, or nitrogen can also be used.

As the absorbing solution, an aqueous solution of iron salt containing ferric ions, that is, a ferric salt aqueous solution is used. The ferric salts to constitute the ferric salt aqueous solution include ferric chloride, ferric sulfate, ferric phosphate, ferric nitrate, and ferric oxalate. The ferric salt aqueous solution to be used in the present invention is not limited to the aqueous solution of single ferric salt as mentioned above, but may be a mixed solution containing two kinds or more of ferric salts. Further, ferrous salts or other kinds of salts may be contained in that solution as long as the object of the present invention is not impaired.

The concentration of the ions in the iron salt aqueous solution is not particularly specified, but preferable concentration of ferric ions is 0.01 to 5.00 mol/l. Ferrous ions are not inevitably but usually contained in the concentration range of 0.01 to 5.00 mol/l.

The iron salt aqueous solution preferably contains a free acid in order to facilitate the electrochemical treatment at the subsequent step. If a free acid is contained, the concentration of it is preferably in the range of 0.01 to 10 mol/l. Examples of acids being effective as free acid are hydrochloric acid, sulfuric acid, phosphoric acid, nitric acid, and oxalic acid.

Procedures of carrying out the gas-liquid contacting step (hydrogen sulfide gas absorbing step 1) are not particularly restricted, and any procedure conventionally used for absorbing gas in liquid by use of an absorption vessel or absorbing tower for general use can be employed.

Examples of absorbing tower to be used in that procedure are bubble tower, spray tower, wetting wall tower, agitating tower, bubble packed tower, and packed tower.

The gas-liquid contacting step to form sulfur from hydrogen sulfide according to the process of the present invention is shown by the following reaction scheme:

$$2Fe^{3+} + H_2S \rightarrow 2Fe^{2+} + 2H^+ + S\downarrow \qquad (I)$$

As seen from the above formula, hydrogen sulfide is oxidized with ferric ion to form sulfur, and the ferric ion is reduced to ferrous ion. As the result, sulfur comes to be contained in the iron salt aqueous solution.

The above-mentioned gas-liquid contacting step (contact reaction) should be carried out at temperatures higher than the melting point of sulfur. By carrying out the reaction at temperatures higher than the melting point of sulfur, sulfur is formed in a molten state, to be separated easily from the aqueous solution based on the difference in specific gravities. The melting point of sulfur is not fixed, but varies by every allotrope. Preferable temperature for the contact reaction ranges from the melting point of the resulting sulfur to 158°C. If the temperature is below this range, sulfur is not formed in a molten state so that the separation of sulfur becomes difficult and sulfur cannot be recovered in a high purity. On the other hand, if the temperature is above the range, the viscosity of the molten sulfur becomes so high that it sometimes is inconvenient to handle.

Pressures under which said contact reaction is carried out are not restricted to a particular range provided the operation is not hindered, but preferable pressure is usually 0,15 MPa (1.5 atm)or higher.

## Molten Sulfur-Coalescing Step

This step is to coalesce the fine drops of sulfur produced in the preceding step to form larger drops (molten sulfur drops) with the use of proper means such as packed layer, for the purpose of recovering the sulfur easily.

Therein, as the means of coalescing the molten sulfur (Molten Sulfur Coalescing Step 2), various procedures may be employed. Usually, molten sulfur is effectively coalesced by use of a packed layer, through which the molten sulfur drops are passed.

Specifically, an absorbing solution containing the molten sulfur drops resulted by absorbing the hydrogen sulfide in the gas-liquid contacting step is passed through a liquid passage (packed layer) which is packed with proper packing material. This passing is accompanied by a loss in pressure between the outlet and the inlet of the packed layer.

The material constituting the packed layer, that is, packing material includes cloths, felts, plate mats, and yarns consisting of fibers such as carbon, glass, ceramics, and resins; particles or pellets consisting of carbon, glass, ceramics, or resins, and laminates thereof.

The structure of the packed layer is not restricted particularly, and can be selected appropriately according to the circumstances. In the packed layer, the ratio of voids is 0.05 to 0.995, the linear velocity in passing the packed layer is 0.001 to 2.0 m/second, the diameter of fibers constituting the packed layer is 1.0 to 1000 $\mu$m, the diameter of the particles or pellets Constituting the packed layer is 0.05 to 10 mm. To form the packed layer, fibrous materials are packed preferably in such a manner that the directions of the fibers are kept perpendicular to the stream of the solution, while particles or pelletes may be filled irregularly.

## Sulfur-Separating Step

In this step, the molten -sulfur collected in the molten sulfur coalescing step is separated by sedimentation based on the difference in specific gravities to be recovered. Since the molten sulfur to be separated and recovered in this step exists in the form of large drops in the absorbing solution which have been formed in the above-mentioned coalescing step, it is easily and rapidly sedimentated to separate.

The sulfur-separating device to be used in the sulfurseparating step 3 is not particularly specified. Conventional devices of various structures such as a thickener type, a vacant drum type, and a sedimentation basin type can be used properly according to the size of molten sulfur drops to be separated and recovered or the designed recovery.

## Electrochemical Regenerating Step

The process of the present invention fundamentally comprises three steps described above, that is, gas-liquid contacting step, molten sulfur coalescing step, and sulfur separating step, but if necessary, electrochemical regenerating step 4 can be added.

In the electrochemical regenerating step, the aqueous solution after the sulfur has been recovered in the above-mentioned sulfur separating step is treated. The aqueous solution (absorbing solution) after the sulfur is recovered contains a large amount of ferrous ions. Said aqueous solution is electrolyzed in this regenerating step to generate hydrogen gas while the ferrous ion is converted into the ferric ion. Then an aqueous solution (absorbing solution) containing largely ferric ions is regenerated, and hydrogen gas is separated and recovered. The reaction proceeds in this step is shown in the following reaction scheme:

$$2Fe^{2+} + 2H^+ \rightarrow 2Fe^{3+} + H_2\uparrow \qquad (II)$$

Ferrous ion is oxidized and regenerated to ferric ion to generate hydrogen gas. The regenerated solution can be reused for the gas-liquid contacting step.

As the device for carrying out the electrochemically regenerating step, an electrolytic vessel which is used for a usual electrolysis and the like can be used.

One of the preferred embodiments of the present invention is described with reference to Fig. 1 as follows.

As shown in Fig. 1, the hydrogen sulfide gas absorbing step 1 (such as the absorbing tower) is charged with hydrogen sulfide gas ($H_2S$) as the gas to be treated and a iron salt aqueous solution containing ferric ions, such as an aqueous solution of ferric chloride. As the ferric chloride aqueous solution, a freshly prepared solution is introduced into the absorbing tower in the initial stage. After the system starts operating, it is efficient and preferred that the ferric chloride aqueous solution recovered in the electrochemically regenerating step 3 (such as an electrolytic bath) is fed.

The inside of the absorbing tower is heated with a heating device which is not shown in Fig. 1 to temperatures above the melting point of sulfur.

When the hydrogen sulfide to be treated and the ferric chloride aqueous solution are introduced into the absorbing tower to be contacted each other, a reaction as represented by the above formula (I) proceeds to produce sulfur in a molten state. Since the temperature in the reaction system is above the melting point of sulfur by heating, the resulting sulfur hardly adheres to the inner wall of the absorbing tower.

The sulfur formed is then transferred to the molten sulfur coalescing step 2 together with the iron salt aqueous solution. Fine drops (particles) of molten sulfur contained in iron salt aqueous solution are coalesced into larger drops in the course of passing through the molten sulfur-coalescing step (such as fiber-packed layer).

The iron salt aqueous solution containing said molten sulfur grown into larger drops is further transferred to the sulfur separating step 3 (sulfur separation device). The inside of the sulfur separating device is also heated to temperature above the melting point of sulfur by a heating mechanism (not shown in Fig. 1).

In the sulfur-separating device, the sulfur in molten state is sedimentated based on the difference of specific gravities. Since the molten sulfur is in the form of larger drops, it is easily sedimentated and separated. The sulfur separated by sedimentation is then easily recovered from the bottom of the sulfur separating device. As the sulfur is produced in molten state, the inside of the sulfur separating device may be of simple structure.

After the sulfur is recovered, on the other hand, the aqueous solution from the sulfur separating device is sent to the electrochemically regenerating step 4 such as electrolytic bath. In the electrolytic bath, the reaction proceeds in accordance with the scheme (II) above.

As the apparatus to be used for the electrochemical treatment, an electrolytic bath of any conventional type can be used. The electrolytic bath is provided with a partition between its anode and cathode. These electrodes are made of acid resistant material such as graphite, and carbon fiber. As the partition, a hydrogen-ion selectively permeable membrane is preferably used.

Electrolysis is carried out by applying voltages, while the iron salt aqueous solution containing ferrous ions treated as above is introduced to the anode chamber of the electrolytic bath, and an aqueous solution containing hydrogen ions in a prescribed concentration is introduced to the cathode chamber, or water in an amount not to dry the partition between the anode and the cathode is replenished.

The ferrous ion is oxidized by electrolysis into ferric ion in the anode chamber, while hydrogen is generated at the cathode.

When a hydrogen-ion selectively permeable membrane is used as the partition, a porous electrode having gas dispersibility, such as graphite fiber cloth, preferably with a catalyst such as platinum deposited thereon may be directly contacted with the partition, if necessary. The electrolysis is carried out usually at room temperature or higher temperatures.

The iron salt aqueous solution containing ferrous ions to be introduced to the anode chamber preferably contains a free acid in an amount ranging from 0.5 to 15 moles per kg of water in order to reduce the cell voltage during electrolysis. The term "free acid" therein means an acid which does not participate in the redox reaction of iron ions.

As the result of electrochemically treating the iron salt aqueous solution containing ferrous ion-left after the sulfur formed has been removed, hydrogen is generated and the ferrous ion is regenerated into ferric ion. Accordingly, the regenerated solution can be repeatedly used as the absorbing solution of hydrogen sulfide.

Since a high concentration of sulfur in the iron salt aqueous solution to be fed to the electrolytic bath lowers the electrolytic efficiency, the sulfur in the iron salt aqueous solution to be fed to the electrolytic bath should be removed as much as possible.

If desired, a filter or a preliminary electrolytic bath can be provided.

According to the process for recovering sulfur of the present invention, sulfur can be separated and recovered very easily, and the post-treatment of the iron salt aqueous solution after the hydrogen sulfide is absorbed in an iron salt aqueous solution is simplified, and whole the apparatus for recovering sulfur can be miniaturized.

In addition, since the iron salt aqueous solution after separation of sulfur is electrochemically treated to regenerate ferric ion and re-used, sulfur can be recovered with a high efficiency from hydrogen sulfide-containing gas, and the hydrogen generated by the electrochemical treatment can be recovered to be put into various uses.

Further, in the process for recovering sulfur of the present invention, the molten sulfur coalescing step is provided at or near the outlet of the gas-liquid contacting step in the closed system, which contributes to accomplishing a high recovery of sulfur, and maintaining a stably high recovery of sulfur without being affected by changes in gas-liquid contacting step or operating conditions.

Consequently, the process of the present invention is effective to improve the recovery of sulfur, to miniaturize the sulfur separating device, and stabilize the efficiency of the electrochemical treatment.

The present invention will be described in more detail with reference to following examples and comparative examples.

Examples 1 to 4

A continuous absorption test was carried out using an absorbing device of packed tower type having an inner diameter of 100 mm, a tower height of 3 m, which was packed with Rasching rings having a representative length of 6 mm.

The absorbing tower was charged from its tower top with an absorbing solution containing ferric ion and having a composition of $Fe^{2+}/Fe^{3+}/HCl = 1.0/0.7/4.5$ mol/liter, while hydrogen sulfide-containing gas having a composition of 20% of $H_2S$ and 80% of $N_2$ was fed from the bottom of the tower, to conduct a continuous absorption operation.

Subsequently, the absorbing solution containing fine drops of molten sulfur produced in the gas-absorbing device was continuously drawn out from the bottom of the tower. Further, the absorbing solution drawn out was continuously fed to the molten sulfur coalescing device which comprises a layer packed with fibers and then the solution treated there was continuously introduced to the sulfur separating device of vertical drum type to separate and recover sulfur.

The solution after sulfur was recovered by the sulfur separating device was electrochemically regenerated, and fed to the gas absorbing device again.

Tables 1 and 2 show gas absorbing conditions, form and structure of the molten sulfur coalescing device, form and structure of the sulfur-separating device, and the recovery of sulfur.

Comparative Example 1

With the use of the devices of Example 1 excepting for the molten sulfur coalescing device, the aqueous solution drawn from the absorbing tower was directly introduced to the sulfur separating device to separate and recover sulfur.

Gas absorbing conditions in the gas absorbing device, form and structure of the sulfur separating device, and the recovery of sulfur are shown in Tables 1 and 3.

Comparative Example 2

The procedure of Example 4 was repeated excepting that the molten sulfur coalescing device was omitted, and that the aqueous solution drawn from the absorbing tower was directly introduced to the sulfur separating device to separate and recover sulfur.

Gas absorbing conditions in the gas absorbing device, form and structure of the sulfur separating device, and the recovery of sulfur are shown in Table 2.

Example 5

A continuous absorption test was carried out using an absorbing device of packed tower type having an inner diameter of 100 mm, a tower height of 3 m, which was packed with Rasching rings having a representative length of 6 mm.

The absorbing tower was charged from its tower top with an absorbing solution containing ferric ions and having a composition of $Fe^{2+}/Fe^{3+}/HCl$ = 0.8/0.9/4.3 mol/liter, while hydrogen sulfide-containing gas having a composition of 20% of $H_2S$ and 80% of $N_2$ was fed from the bottom of the tower, to conduct a continuous absorption operation.

Subsequently, the absorbing solution containing fine drops of molten sulfur produced in the gas-absorbing device was continuously drawn out from the bottom of the tower. Further, the absorbing solution drawn out was continuously fed to the molten sulfur coalescing device which comprises a layer packed with fibers, and then the solution treated there was continuously introduced to the sulfur separating device of vertical drum type to separate and recover sulfur.

The solution after sulfur was recovered by the sulfur separating device was electrochemically regenerated, and fed to the gas absorbing device again.

Gas absorbing conditions, form and structure of the molten sulfur coalescing device, form and structure of the sulfur-separating device, and the recovery of sulfur are shown in Table 4.

Under the conditions of Example 5, a series of operation of absorbing hydrogen sulfide, separation and recovering of sulfur, and electrochemically regenerating was continuously conducted for 5000 hours at a constant level.

Comparative Example 3

With the use of the device used in Example 5 excepting for the molten sulfur coalescing device, the aqueous solution drawn from the absorbing tower was directly introduced to the sulfur separating device to separated and recover sulfur. Gas absorbing conditions in the gas absorbing device, form and structure of the sulfur separating device, and the recovery of sulfur are shown in Table 4.

In Comparative Example 3, the unrecovered sulfur was coagulated after the sulfur separating device and, as a result, the sulfur made the passage blocked. Accordingly a series of operations of absorbing hydrogen sulfide, separation and recovering of sulfur, and electrochemically regenerating was continued for as short as 120 hours.

Table 1

| | | Example 1 | Example 2 | Comparative Example 1 |
|---|---|---|---|---|
| Gas Absorbing | Flow Rate of Solution (1/min.) | 1.0 | 0.5 | 1.0 |
| | Flow Rate of Gas (Nl/min.) | 4.0 | 4.0 | 4.0 |
| | Absorbing Temperature (°C) | 130 | 130 | 130 |
| | Absorbing Pressure MPa (kg/cm$^2$G) | 0.45(3.5) | 0.45(3.5) | 0.45(3.5) |
| Form of Molten Sulfur Coalescing Device and Structure of Packed Layer | Cross Section of the Layer (cm$^2$) | 12.5 | 4.2 | - |
| | Height of the Layer (cm) | 22.0 | 10.0 | - |
| | Diameter of Fiber (μm) | 5 to 30 | 5 to 30 | - |
| | Voids of the Layer (-) | 0.97 | 0.97 | - |
| Form of Sulfur Separating | Inner Diameter of the Drum (mm) | 250 | 250 | 250 |
| | Height of the Drum (mm) | 250 | 250 | 250 |
| Recovery of Sulfur (%) | | 99.0 | 98.7 | 65.3 |

EP 0 464 532 B1

Table 2

| | | Example 3 | Example 4 | Comparative Example 2 |
|---|---|---|---|---|
| Gas Absorbing | Flow Rate of Solution (l/min.) | 1.0 | 1.0 | 1.0 |
| | Flow Rate of Gas (Nl/min.) | 6.0 | 8.0 | 8.0 |
| | Absorbing Temperature (°C) | 130 | 130 | 130 |
| | Absorbing Pressure $MPa$ (kg/cm$^2$G) | 0.45(3.5) | 0.45(3.5) | 0.45(3.5) |
| Form of Molten Sulfur Coalescing Device and Structure of Packed Layer | Cross Section of the Layer (cm$^2$) | 12.5 | 12.5 | - |
| | Height of the Layer (cm) | 10.0 | 10.0 | - |
| | Diameter of Fiber (μm) | 5 to 30 | 5 to 30 | - |
| | Voids of the Layer (-) | 0.97 | 0.97 | - |
| Form of Sulfur Separating | Inner Diameter of the Drum (mm) | 250 | 250 | 250 |
| | Height of the Drum (mm) | 250 | 250 | 250 |
| Recovery of Sulfur (%) | | 99.3 | 99.5 | 72.3 |

EP 0 464 532 B1

Table 3

| | | Comparative Example 1 |
|---|---|---|
| Gas Absorbing | Flow Rate of Solution (l/min.) | 1.0 |
| | Flow Rate of Gas (Nl/min.) | 4.0 |
| | Absorbing Temperature (°C) | 130 |
| | Absorbing Pressure $MPa$ (kg/cm²G) | 0.45(3.5) |
| Form of Molten Sulfur Coalescing Device and Structure of Packed Layer | Cross Section of the Layer (cm²) | - |
| | Height of the Layer (cm) | - |
| | Diameter of Particle (cm) | - |
| | Voids of the Layer (-) | - |
| Form of Sulfur Separating | Inner Diameter of the Drum (mm) | 250 |
| | Height of the Drum (mm) | 250 |
| Recovery of Sulfur (%) | | 65.3 |

Table 4

| | Example 5 | Comparative Example 3 |
|---|---|---|
| **Gas Absorbing** | | |
| Flow Rate of Solution (l/min.) | 0.8 | 0.8 |
| Flow Rate of Gas (Nl/min.) | 8.0 | 8.0 |
| Absorbing Temperature (°C) | 130 | 130 |
| Absorbing Pressure $MPa$ (kg/cm²G) | 0.45(3.5) | 0.45(3.5) |
| **Form of Molten Sulfur Coalescing Device and Structure of Packed Layer** | | |
| Cross Section of the Layer (cm²) | 12.5 | – |
| Height of the Layer (cm) | 10.0 | – |
| Diameter of Fiber (μm) | 5 to 30 | – |
| Voids of the Layer (-) | 0.97 | – |
| **Form of Sulfur Separating** | | |
| Inner Diameter of the Drum (mm) | 250 | 250 |
| Height of the Drum (mm) | 250 | 250 |
| **Recovery of Sulfur (%)** | 99.6 | 77.8 |

## Claims

1. A process for recovering the sulfur from hydrogen sulfide-containing gas with an aqueous iron salt solution containing ferric ions in an absorption vessel, at a temperature higher than the melting point of sulfur resulting in sulfur formation,
   **characterized by**
   coalescing the fine drops of molten sulfur dispersed in the resulting solution containing both ferrous and ferric ions, said solution flowing continuously out of an outlet disposed in a lower part of said absorption vessel without being agitated, into larger drops by passing the fine drops through a fiber-containing layer with a linear velocity of 0.013 to 2 m/s, said layer having a void-ratio of 0.05 to 0.995, and said

11

fibers having a diameter of 1.0 to 1000 $\mu$m, and then separating and recovering the sulfur.

2. A process according to claim 1, wherein the diameter of the fibers is 5 to 30 $\mu$m.

3. A process according to claim 1 or 2 additionally comprising a step consisting of electrochemically treating the aqueous solution obtained by separating sulfur to recover hydrogen and the regenerated aqueous iron salt solution containing ferric ions.

4. A process according to one or more of claims 1 to 3, wherein the concentration of ferric ions in the aqueous iron salt solution is 0,01 to 5 mol/l.

5. A process according to one or more of claims 1 to 4, wherein the height of the fiber-containing layer is 22 cm or less.

**Patentansprüche**

1. Verfahren zur Rückgewinnung von Schwefel aus Schwefelwasserstoff enthaltendem Gas mit einer wäßrigen Eisensalzlösung, die Eisen(III)-Ionen enthält, in einem Absorptionsbehälter bei einer Temperatur höher als der Schmelzpunkt von Schwefel, was zu einer Schwefelbildung führt, gekennzeichnet durch das Koaleszieren der feinen Tröpfchen des geschmolzenen Schwefels, der in der erhaltenen Lösung dispergiert ist, die sowohl Eisen(II)- als auch Eisen(III)-Ionen enthält, wobei die Lösung kontinuierlich aus einem Auslaß abfließt, der im unteren Teil des Absorptionsbehälters angeordnet ist, ohne daß gerührt wird, zu größeren Tropfen durch Führen der feinen Tröpfchen durch eine faserhaltige Schicht mit einer linearen Geschwindigkeit von 0,013 bis 2 m/s, wobei die Schicht ein Hohlraumverhältnis von 0,05 bis 0,995 hat, und wobei die Fasern einen Durchmesser von 1,0 bis 1000 $\mu$m haben, und anschließend Abtrennung und Rückgewinnung des Schwefels.

2. Verfahren nach Anspruch 1, worin der Durchmesser der Fasern 5 bis 30 $\mu$m beträgt.

3. Verfahren nach Anspruch 1 oder 2, das zusätzlich eine Stufe enthält, bestehend aus der elektrochemischen Behandlung der wäßrigen Lösung, die durch Abtrennung von Schwefel erhalten wird, um Wasserstoff und eine regenerierte wäßrige Eisensalzlösung, die Eisen(III)-Ionen enthält, zurückzugewinnen.

4. Verfahren nach einem oder mehreren der Ansprüche 1 bis 3, worin die Konzentration der Eisen(III)-Ionen in der wäßrigen Eisensalzlösung 0,01 bis 5 Mol/l beträgt.

5. Verfahren nach einem oder mehreren der Ansprüche 1 bis 4, worin die Höhe der faserhaltigen Schicht 22 cm oder weniger beträgt.

**Revendications**

1. Procédé pour la récupération du soufre à partir de gaz contenant de l'hydrogène sulfuré au moyen d'une solution aqueuse de sel de fer contenant des ions ferriques dans un récipient d'absorption, à une température supérieure au point de fusion du soufre résultant en la formation de soufre, caractérisé par la coalescence de gouttes fines de soufre fondu dispersées dans la solution résultante contenant à la fois des ions ferreux et ferriques, ladite solution s'écoulant vers l'extérieur de manière continue d'une sortie disposée dans une partie inférieure dudit récipient d'absorption sans agitation, en gouttes plus grosses en faisant passer les gouttes fines au travers une couche contenant des fibres avec une vitesse linéaire comprise entre 0,013 et 2 m/s, ladite couche ayant un taux de lacune compris entre 0,05 et 0,995, et lesdites fibres ayant un diamètre compris entre 1,0 et 1 000 $\mu$m, et puis en séparant et en récupérant le soufre.

2. Procédé selon la revendication 1, dans lequel le diamètre des fibres est compris entre 5 et 30 $\mu$m.

3. Procédé selon la revendication 1 ou 2 comprenant en plus une étape consistant à traiter de manière électrochimique la solution aqueuse obtenue en séparant le soufre afin de récupérer l'hydrogène et la solution aqueuse régénérée de sel de fer contenant les ions ferriques.

4. Procédé selon une ou plusieurs des revendications 1 à 3, dans lequel la concentration en ions ferriques dans la solution aqueuse de sel de fer est comprise entre 0,01 et 5 moles/l.

5. Procédé selon une ou plusieurs des revendications 1 à 4, dans lequel la hauteur de la couche contenant les fibres est de 22 cm ou moins.

# FIG.1